# EUROPEAN PATENT SPECIFICATION

(11) **EP 0 819 963 B1**
(45) Date of publication and mention of the grant of the patent: **17.09.2003**
(21) Application number: 96305198.2
(22) Date of filing: 16.07.1996
(51) Int. Cl.: G02B 21/00

(54) **Control of IR microscope**
Kontrolle eines Infrarotmikroskops
Contrôle d'un microscope infrarouge

(43) Date of publication of application: 21.01.1998
(73) Proprietor: PERKIN-ELMER LIMITED, Beaconsfield, Buckinghamshire HP9 1QA (GB)
(72) Inventor: Carter, Ralph Lance, Corner Lodge, Thame, Oxon. OX9 3QY (GB); Wells, Simon Adrian, Wendover, Buckinghamshire (GB); Clark, David Robert, Twickenham, Middx TW2 6RS (GB)
(74) Representative: Smith, Norman Ian

(56) References cited:
- EP-A- 0 186 490
- EP-A- 0 353 504
- EP-A- 0 453 239
- US-A- 4 202 037
- US-A- 5 216 596
- IBM TECHNICAL DISCLOSURE BULLETIN, vol. 30, no. 7, December 1987, ARMONK, NEW YORK US, pages 287-288, XP002021886 "microscope auto-focussing system"
- AMERICAN LABORATORY, November 1990, pages 26-40, XP000195637 "an ftir microscope"

## Description

This invention relates to the control of microscopes which are used in spectroscopy such as IR spectroscopy.

In the field of spectroscopy it is known to provide a microscope which can operate in conjunction with a spectrophotometer. Such apparatus are used to obtain infrared spectra of samples. A known microscope is the Perkin-Elmer FT-IR microscope which is described for example in an article by D.W. Shearing, E.F. Young and T.P. Byron entitled "An FT-IR microscope", published in American Laboratory, November 1990. Such a microscope includes a movable stage on which a sample to be investigated can be mounted. The microscope permits both visible observation of the sample and analysis of the sample by infrared radiation, either in a transmitting mode or a reflectance mode. The microscope also includes a video camera which can be used in conjunction with the visible viewing means in order to generate a video image of the sample for display on the display means of a computer.

The microscope can be used in conjunction with a spectrophotometer such as a Perkin-Elmer System 2000 FT-IR spectrophotometer. This instrument can receive infrared radiation either transmitted via the sample or reflected from the sample and provide an output indicating the spectrum of the sample.

The stage of the microscope is movable so that in an initial step it can be moved in an X-Y plane to appropriately locate the sample so that analysis of a selected part of the sample can be achieved.

In European Patent Publication EP 0 731 371 we described a method and apparatus for facilitating positioning of the sample stage using images of the stage on a display means of a computer. That invention also provided a facility for enhancing display of acquired data.

A first aspect of the invention described in European Patent Publication EP 0 731 371 concerned a method of controlling a motor driven stage of a microscope which has a video camera for viewing a sample on the stage, said method comprising creating on a display means of a computer coupled to the video camera an image of the sample, creating and superimposing on said image one or more graphical markers, using said marker or markers to create coordinate data identifying positions of interest on said sample and using said coordinate data subsequently to control the positioning of said stage.

A second aspect of that invention concerned a method of controlling a motor driven stage of a microscope which has a video camera for viewing a sample on said stage and an associated computer and display means for displaying a video image of an area viewed by said camera, said method comprising creating on said display means an image of an area of interest on said sample, storing data representative of said image, adjusting the position of said stage to identify another area of said sample and storing data representing that image, repeating said steps for a selected number of areas of said sample, combining said data to create an image of a larger area of said samplewhich is made up of said individual areas of interest, creating and superimposing on said larger area image one or more graphical markers, using said marker or markers to create coordinate data identifying positions on said sample, and subsequently using said coordinate data to control the positioning of said stage.

A third aspect of that invention concerned a system for controlling a motor driven stage of a microscope which has a video camera for viewing a sample on the stage, said system including a display means, and a computer for controlling said display means to create on said display an image of a sample on its microscope stage, said computer being arranged to create and superimpose on said image one or more graphical markers which can be used to create coordinate data identifying positions of interest which are used subsequently to position the stage for analysis of the sample.

A fourth aspect of that invention concerned a system for controlling a motor driven stage of a microscope which has a video camera for viewing a sample on the stage, said system including a display means and a computer for controlling the display to create on said display an image of an area of a sample on the microscope stage, said computer being arranged to store data representative of an image of the viewed area, to move the stage to another area and store data representative of that area, to repeat these steps for a selected number of areas and to combine the stored data to provide an image of the sample which is larger than the individual areas, said computer also being arranged to come to be displayed and superimposed on the larger area image one or more graphical members which are used to create coordinate data identifying positions of interest on the sample which can be stored and used subsequently to position the stage for analysis of the sample.

EP-A-0453239 describes an optical microscope which has a plurality of objective lenses with different magnifications. An image of a specimen can be viewed on a display monitor and a desired region for viewing is denoted. The necessary magnification to view that region is calculated and the objective lens appropriate to that magnification is selected to view the region. The stage of the microscope is adjusted automatically for alignment with the selected lens.

The present invention is concerned with an enhancement of the above arrangement.

According to a first aspect of the present invention there is provided a system for acquiring IR data including an IR microscope with a motor driven stage, said microscope having a video camera for viewing a sample on the stage and said system including display means and a computer for controlling the display means to create on said display means an image of an area of a sample on the microscope stage, said computer being arranged to create and superimpose on said image one or more graphical markers which can be used to create coordinate data identifying positions of interest, which data is stored by said computer, the software operated by said computer controlling the acquisition of data for each point of interest such that coordinate data for several positions of interest can be stored, said stored data being used subsequently during a scanningstep to automatically position the stage for analysis of the sample, whereby the stage is moved automatically successively to each position of interest defined by said stored data and IR-data is acquired for each position of interest, wherein said stage is movable in both a horizontal and a vertical plane and said computer is arranged, during said analysis, at each position of interest, to adjust the position of the stage in order to bring into focus an image of the sample on the stage.

The microscope may include a condenser lens and means for adjusting the vertical position of the condenser lens, said computer being arranged at each position of interest, to cause the position of the condenser lens to be adjusted to that which provides a maximum intensity of infra red radiation at the detector of the microscope.

The computer may provide signals to effect automatic focusing on the basis of an image analysis procedure carried out at each position of interest. The automatic focus may be carried out in both the reflection mode and transmission mode of the microscope.

The invention will be described now by way of example only, with particular reference to the accompanying drawings. In the drawings:
Figure 1 is a schematic view of an FT-IR microscope operating in accordance with the principles of the present invention;
Figure 2 is a side elevation showing the principal elements of an FT-IR microscope;
Figure 3 is a schematic block diagram of a microscope assembly in accordance with an embodiment of the present invention;
Figures 4, 4a, 4b, 4c, 5 and 5a show displays which can be generated on the display means of Figure 3;
Figure 6 shows a display of an acquired spectrum;
Figure 6a shows a display operated during a mapping procedure;
Figures 7a to 7d are flow charts of the software operating on the computer;

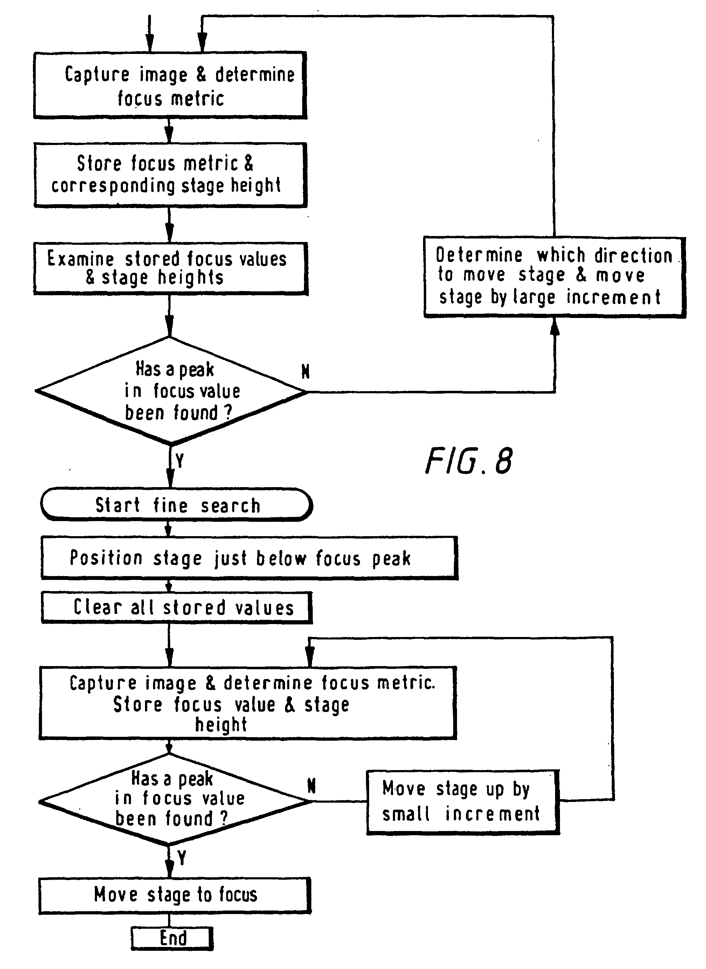

Figure 8 is a flow chart illustrating an automatic focusing routine carried out in accordance with the present invention;

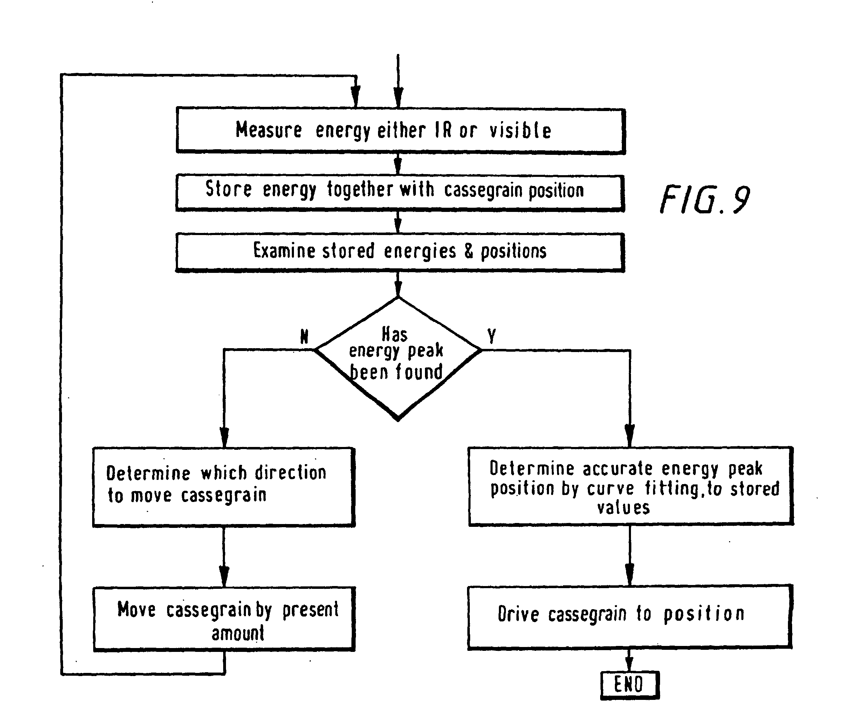

Figure 9 is a flow chart illustrating a routine for controlling adjustment of the condenser lens assembly, and
Figure 10 is an exploded perspective view of a mechanism for effecting movement of the condenser lens assembly.

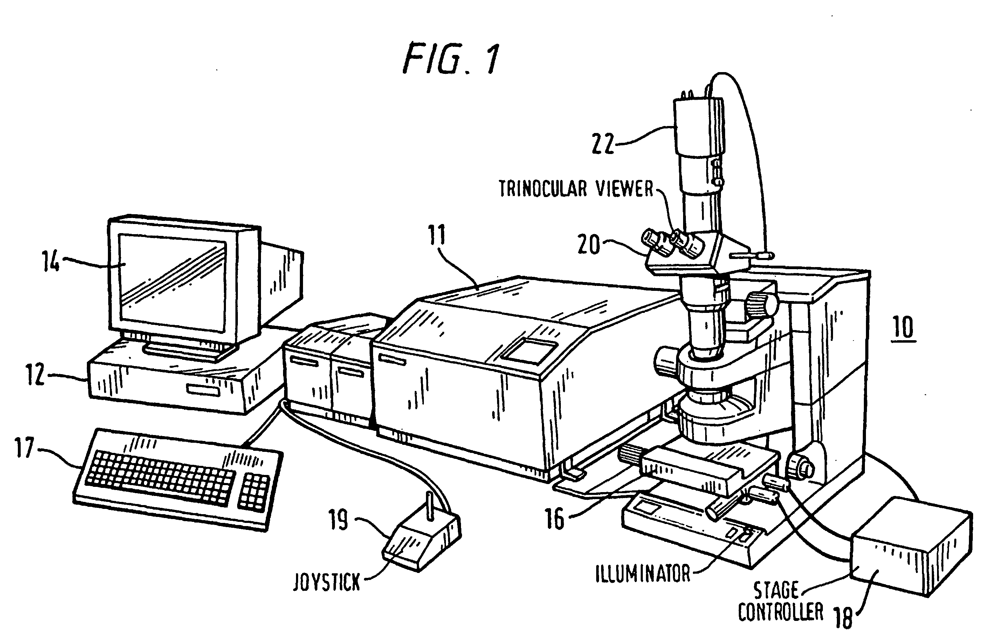

The invention will be described specifically with reference to an FT-IR microscope used in conjunction with an IR spectrophotometer. A basic arrangement is illustrated in Figure 1 of the drawings. It comprises a microscope (10), a spectrophotometer (11), a computer (12) with a display means (14), a keyboard (17) and joystick (19). The microscope includes a movable stage (16) which can be driven in X, Y and Z directions by means of a stage controller (18). The microscope also includes viewing means in the form of a microscope viewer (20) for enabling the sample on the stage (16) to be viewed prior to an analysis step and also includes a video camera (22) which can be used to generate a video image of the sample stage.

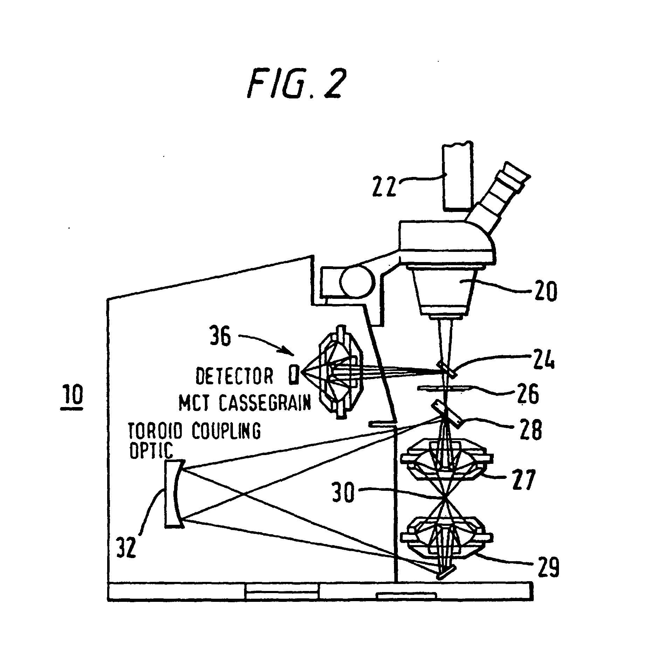

The microscope (10) can be an FT-IR microscope of the type manufactured by Perkin-Elmer Corporation. Such a microscope has a basic structure which is illustrated in Figure 2 of the drawings. The microscope includes the optical microscope (20), a view/IR mirror (24), a remote aperture (26), a transmittance/reflectance mirror (28), an objective Cassegrain lens assembly (27) and a condenser Cassegrain lens assembly (29) with the sample position (30) being located therebetween. The drivable stage (16) is located at the sample position. In addition, the microscope includes a toroid coupling optic (32) which is used to direct radiation towards the sample. In the present arrangement view/IR mirror (24) is movable automatically between a first position in which a sample can be viewed either by the video camera (22) or through the microscope (20) and a second position in which IR measurement can be carried out.

Alongside the view/IR slider there is provided a detector (36) of the MCT type which can provide data in response to received infrared radiation which is fed to the spectrophotometer for analysis. It is not necessary for the purposes of the present invention to describe the microscope in any more detail since its function will be apparent to those skilled in the art. A fuller description can be found in the manual of The Perkin-Elmer FT-IR microscope and also in the previously referred to article entitled "An FT-IR microscope" published in American Laboratory of November 1990.

In operating such an arrangement a sample is placed upon the movable stage (16) and the first step is to position the sample prior to analysing it by irradiating it with infrared radiation. The sample is positioned by viewing it either optically through the microscope (20) or on the display means (14) using the video camera (22), or both. Once the stage has been positioned appropriately, then a selected area of the sample can be analysed by obtaining an infrared spectrum. The present technique is concerned with identifying areas of interest on the sample using the display means (14) and the subsequent control of the stage during an analysis step to enable those areas of interest to be analysed automatically. In addition the position of the condenser Cassegrain (29) can be adjusted.

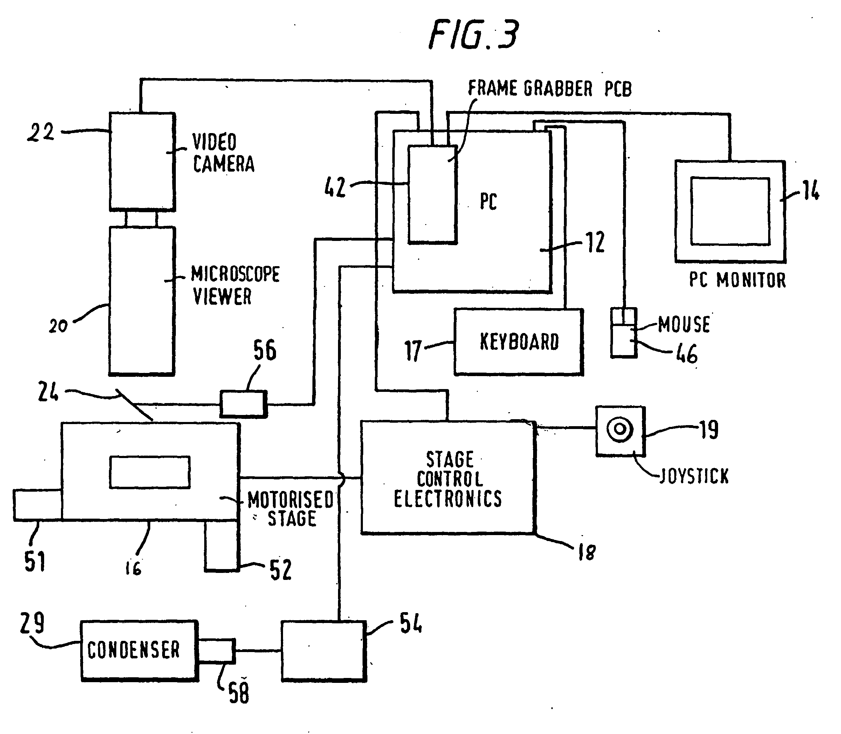

This technique will be described now with reference to Figure 3 of the drawings, which is a schematic block representation of an embodiment of the invention. In Figure 3 the video camera is shown at (22)and operates in conjunction with the microscope viewer which is illustrated at (20) . The video camera is connected to a circuit board (42) of the computer (12), that circuit board providing the computer (12) with the capability of controlling the display means to display a video image of the movable stage (16). The circuit board (42) is a commercially available board known as a frame grabbing card. Associated with the computer is the keyboard (17) and a pointer control, typically a mouse, (46). The motorised stage is shown at (16) and operates in conjunction with stage control electronics (18) which are coupled to the computer (12). Associated with the electronics (18) is the joystick (19) which enables an operator to manually control movement of the movable stage (16) The stage (16) includes motors (51, 52) for driving the stage in an X-Y plane. The stage (16) also includes a motor (not shown) for moving it in the vertical or Z direction. The computer (12) also has an output to provide signals to a circuit (54) which can control the position of the condenser Cassegrain (29). To this end the condenser assembly has associated therein a motor (58) which can be energised to move the assembly vertically along the microscope housing, either upwardly or downwardly. A further output (56) from the computer (12) provides control signals for controlling movement of the mirror (24).

In the following description it will be assumed that the software is operating in a Windows environment but it will be appreciated that the invention is not restricted to such an example. The computer (12) is thus one which can operate the Windows operating system.

Initially the microscope (20) is used to view the sample on the stage and also an image of a portion of the sample is generated on the display means (14) using the video camera (22). The stage (16) can be controlled electronically through the controller (18) either by use of the joystick controller (19) or in response to commands generated by the computer (12). Briefly the video camera (22) samples the image and transmits electronic data to the frame grabbing card (42) of the computer and this data is processed and used to generate a display which is a live video image of the sample. In addition the software stored in the computer can superimpose graphical images on the image of the sample.

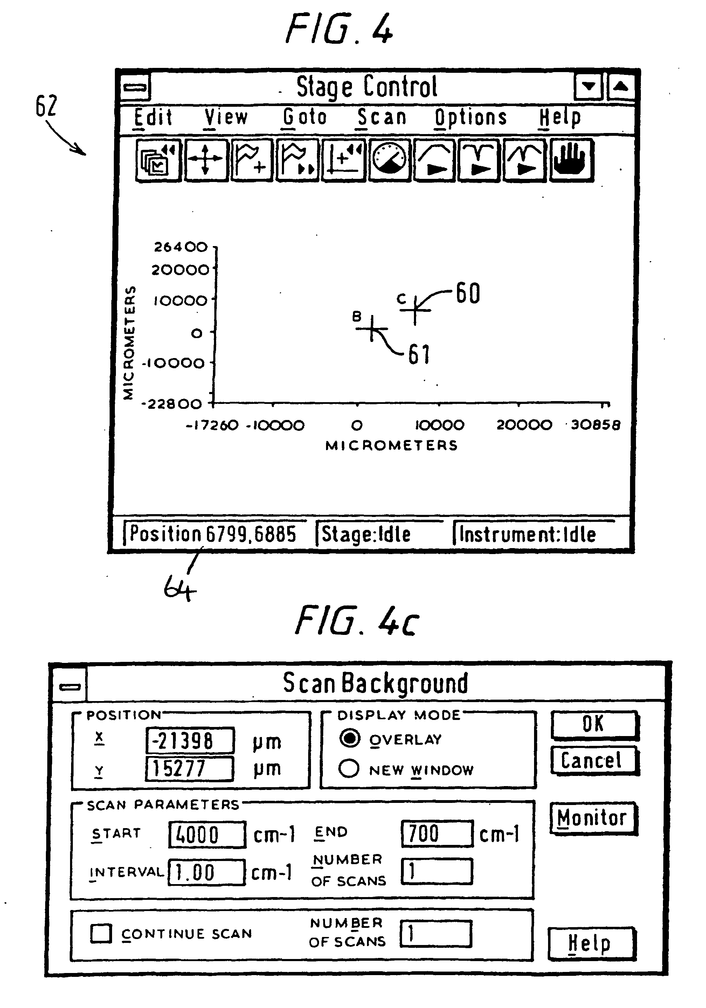

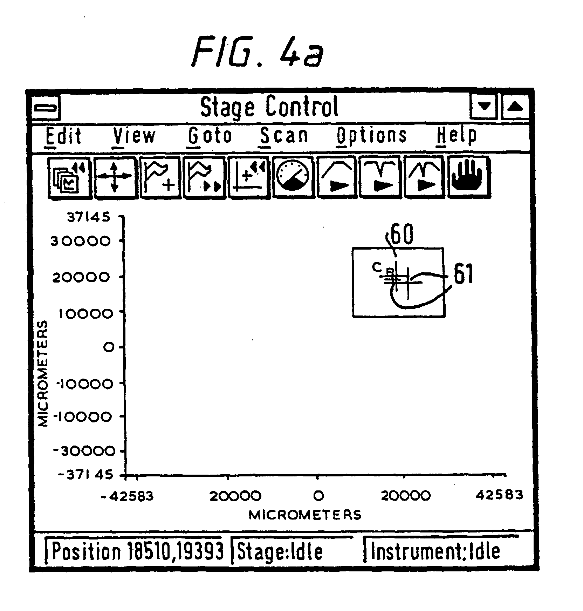

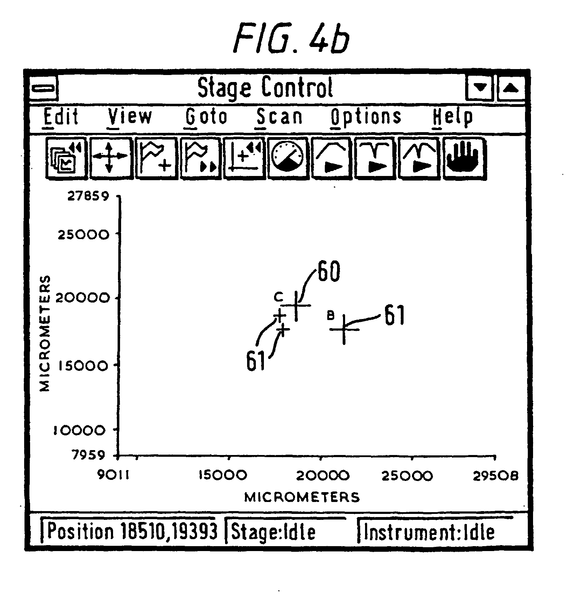

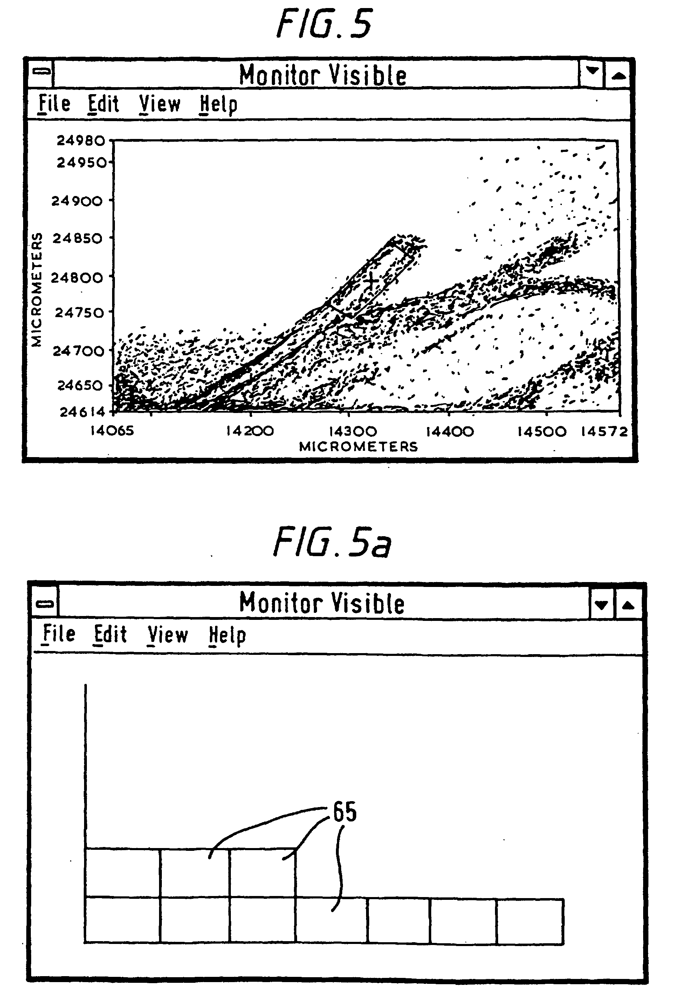

Figures 4 and 5 show typical displays which can be created. The first display is known as a stage control window which enables an operator to adjust the position of the sample stage. As can be seen, the display includes markers (60 and 61). The marker (60) is a current aperture marker which shows the position on the sample stage of the microscope aperture. It can be used to move the sample stage to different positions without using the joystick. In order to do this the mouse is controlled to move the mouse pointer close to the marker (60). The marker (60) is then dragged across the display by moving the mouse position. The sample stage is then moved by the stage control electronics (18) to a position corresponding to the repositioned pointer (60). It will be appreciated that the stage can be continuously repositioned using this procedure. The display shown in Figure 4 also includes a tool bar facility (62) which comprises a number of icons selectable using the mouse.

Figure 5 shows an example of a display which is a video image of an area of the sample itself. The computer is programmed so that markers can be superimposed on the image of the sample and moved around the sample by means of a pointer control, typically the mouse. In use of the apparatus a sample to be analysed is placed on the sample stage of the microscope. The sample stage is positioned roughly by moving the stage with the joystick control. This positioning can be carried out visually.

The two displays (Figure 4 and Figure 5) are then viewed on the display means simultaneously. An operator identifies on the Figure 5 Window an area of interest and using the current stage position marker (60), as described above, moves the stage until that area is centred on the display. Then by using the mouse control buttons the operator marks the area of intent and this produces a marker (61) which does not subsequently move relatively to the area it identifies. The display (14) can also display the coordinates of the marked position as indicated by (64) in Figure 4. Those coordinates are also in the computer memory.

The software then allows an operator to move to another area of interest using the marker (60) as described above and to store in a similar manner data representative of the coordinates of that point of interest. This process can be repeated for as many areas of interest as necessary and coordinate data relating to those areas of interest are stored in the computer memory. For each area of interest a marker (61) will appear on the display. Figure 4a shows a display with a number of marked points (61). Figure 4a also shows how a box can be drawn around the points under the control of a mouse and then that area defined by the box is expanded to create another Window (Figure 4b) with the points displayed on a different scale.

The software for the above operation operates generally as follows. The software continuously polls the stage control electronics (18) for the current stage position. This software has been precalibrated with-camera image size information and is then able to calculate the stage coordinates of any point on the live video image displayed on the display means (14). Once the feature on the sample is visible in the display it can be rapidly centred by pointing at it using the mouse, as explained above. The software then calculates the coordinates and causes the stage (16) to move to them. The current centre of view is marked with a small computer generated marker. As the stage is moved this marker is repositioned so as to remain with the feature it is marking. This is repeated for each point of interest to be defined.

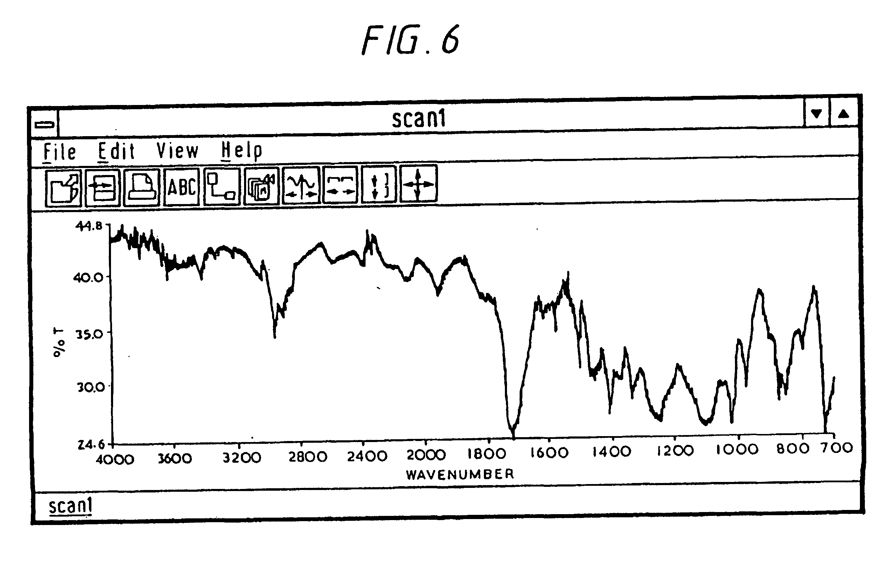

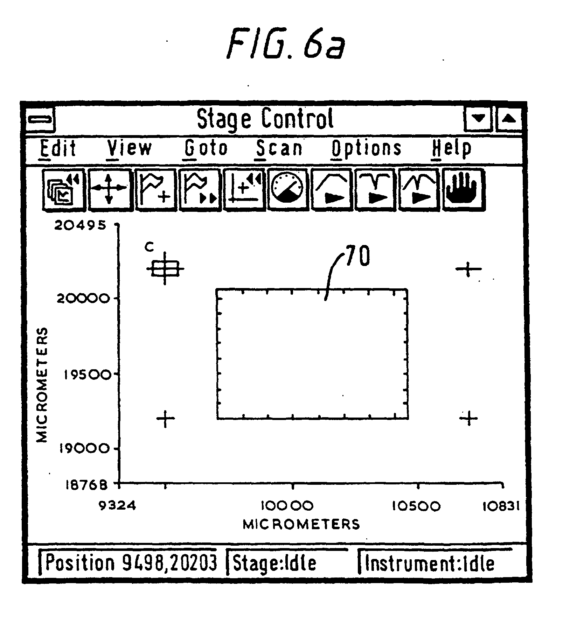

Subsequently the software is used to control automatically the acquisition of analysis data for each of the points of interest during an infrared scanning operation. In setting up for spectra acquisition an operator is presented with a Window of the type shown in Figure 4c. this enables the operator to set up the scan parameters. This particular Window has been designed for use with the Paragon 1000 instrument. In the acquisition of spectra operation the stage is moved automatically to positions corresponding to the stored coordinate data, i.e. the positions identified by markers (61). At each position the sample is scanned with infrared radiation in the usual manner and a spectrum acquired by the spectrophotometer. These spectra can be displayed on the display means and Figure 6 illustrates an example of such a display.

Thus it will be seen that the above arrangement provides an operator with an ability to superimpose computer generated graphic markers on a live video image of a sample under investigation, these images being displayed on a display screen of a computer. The arrangement also enables an operator to define data representing the position of points of interest on the sample using the computer generated graphic markers and the live video image of the sample. Subsequently the coordinate data can be used during a scanning step to automatically position the sample stage (16) in order to acquire infrared spectral data for each of the points of interest identified by an operator. A further feature of the present arrangement is that the markers (61) enable an operator to return the stage easily and accurately to a position at which a marked point on a sample can be viewed again.

An enhancement to the above arrangement will now be described also with reference to the existing Figures. As will be appreciated the video camera (22) can generate an image only of a certain area of the sample under investigation. The enhancement to be described enables the display means to create a display of a larger area of the sample than can be obtained from a single view of the camera.

The way in which the image is created on the display is as described above. In the present enhancement the software is provided with stage coordinates which describe or define a region of interest. The program then controls the stage to move to a number of positions in that region and at each position a video image of the region is acquired. These images are stored in the memory of the computer (12). The individual images are then combined to form on the display means an image of the whole of the target region which represents the combination of the individual areas. This is illustrated in Figure 5a where each region (65) represents an area corresponding to the area displayed on Figure 5. Once this process has been completed the image of the large area is displayed on the screen (14) and a graphical marker is superimposed on that display as described above. That marker can be used as described above in order to identify areas of interest as previously described. The coordinates of those.points of interest are evaluated and data representative of those coordinates stored in the computer memory. These coordinates are then used in the manner already described in order to obtain infrared spectra from the points of interest.

It will thus be seen that the enhancement allows the display means to display an image of an area of the sample which is much greater than the area which can be viewed by the camera (22) at any one time. This is a significant feature which improves the speed at which infrared data can be acquired.

The software operating on the computer can also be arranged to provide other facilities. For example where a number of spectra have been acquired as described above the software can be arranged so the display means is caused to display second or third graphical representations of the data. As will be apparent to those skilled in the art the data resulting from the IR analysis can be processed in a number of ways and appropriate displays generated. Different versions of the data can be displayed simultaneously in different Windows. Graphical software controls are superimposed on those displays and these respond to instruction input via the mouse. The control can be used such that their positions on the axes a graph (such as that of Figure 6) affect not only the data displayed in the Windows containing that graph but also parameters in another Window or Windows which may for example be displaying the data in a different format. Thus it is possible by moving a control in one window to effect a calculation which modifies all the Windows displaying that data.

Also the software can be arranged so that it is capable of controlling the storing of data in the computer memory such that data representing all parameters associated with the display of the acquired IR data is stored in a single file. This means that when the file is recalled all the data is displayed in the Windows in the state it was at the time of being stored.

Other facilities which can be provided include identifying for example peaks in a spectrum. In Figure 6 for example the mouse controlled pointer can be used to point to a peak whose wavelength is to be identified. By clicking on the mouse the display can be instructed to display the wavelength numerically. Alternatively the display can be operated to drive a line from the peak to the abscissa so that the wavelength can be read off. Also spectra can be overlaid one on another for comparison purposes.

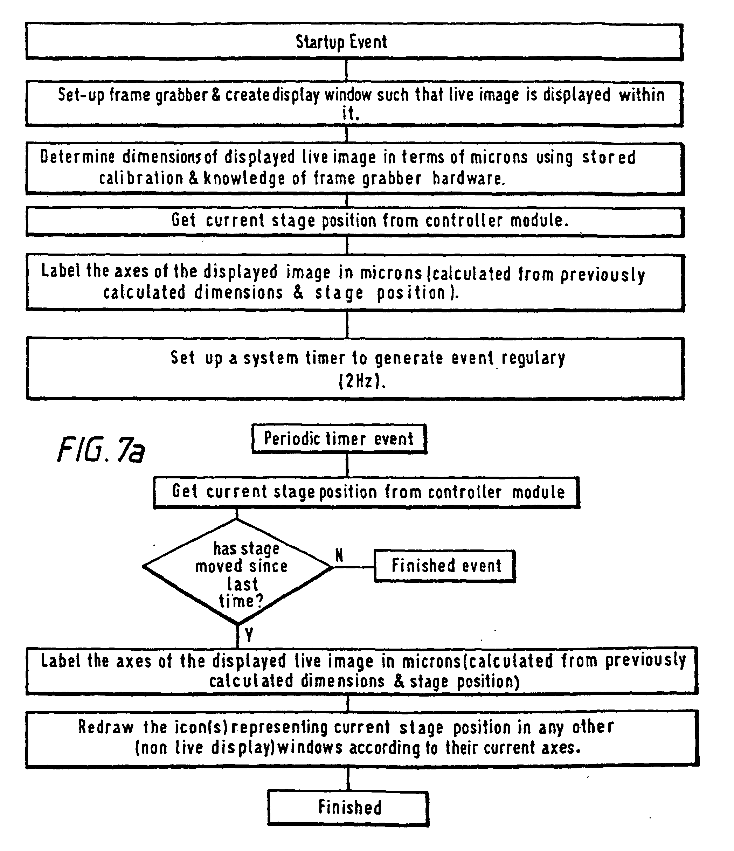

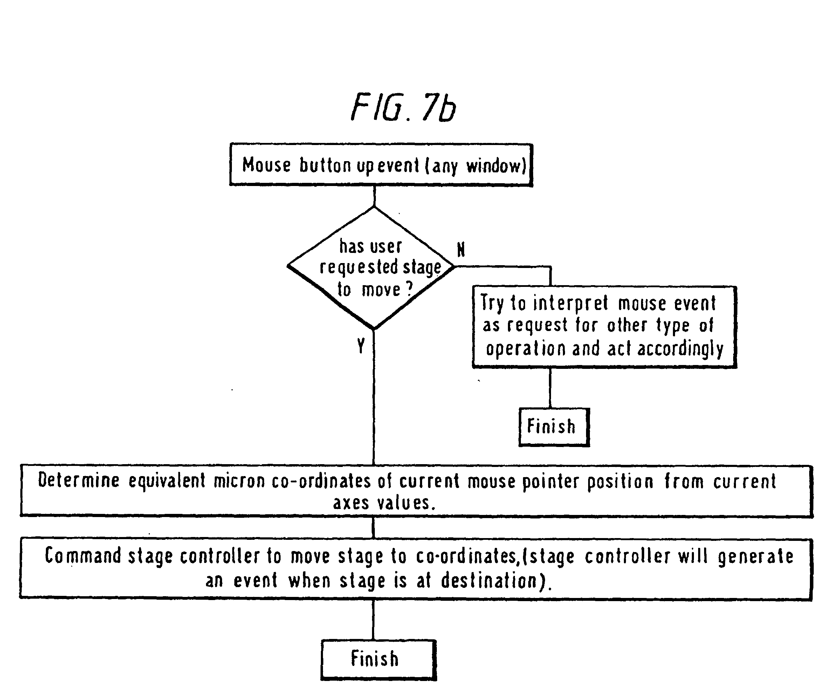

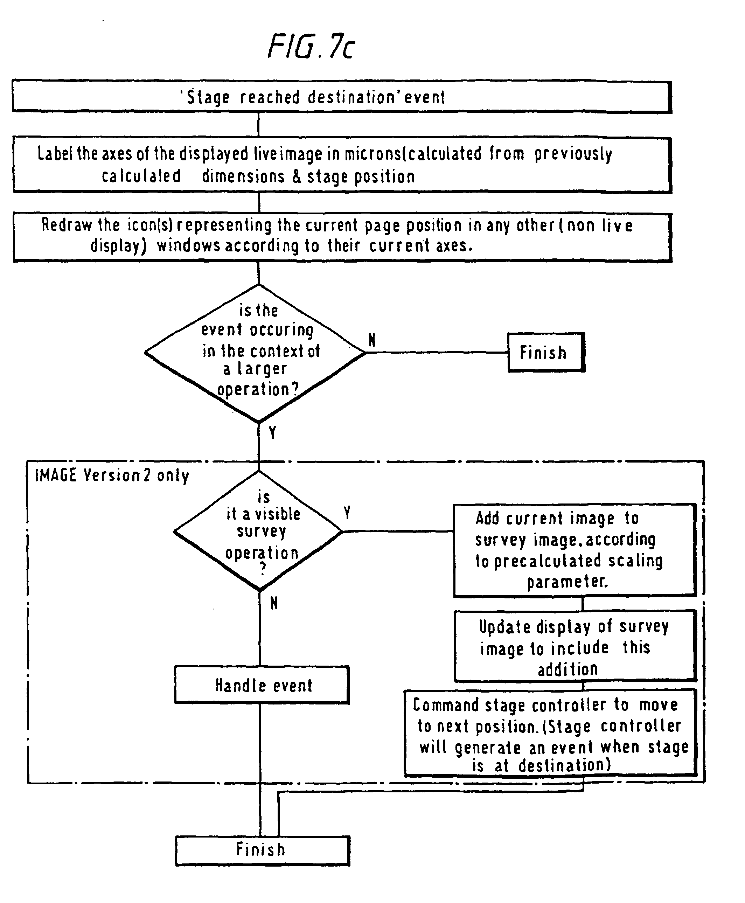

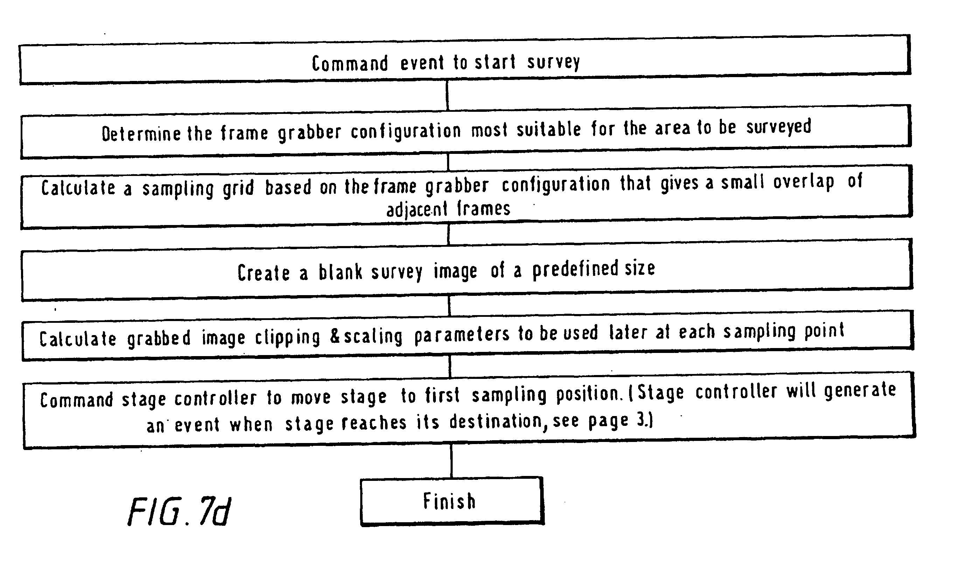

A flow chart which illustrates the software operating in the computer (12) is shown in Figure 7.

Another procedure which can be carried out with the present system is that of mapping. In order to create a map an area of interest is first identified using for example the marker (60) as described above. The area to be mapped is then defined using the marker (60). The marker is first moved to one corner of the area and that corner marked using the mouse. The other corners are then identified in a similar way.

Using other Windows an operator then defines the parameters of the map such as the number of scans and the intervals between scan points on the map. The system can then display g rid boundary representing the area to be mapped. This is illustrated at (70) in Figure 6a. The system is then instructed to collect data from the points defined on the grid. The stage is moved to each point on the grid and data, e.g. a spectra, collected at each point.

Once obtained the map data can be presented in a number of ways. For example coloured blocks can be used to show the data from each area. A spectra from a particular point on the grid can be selected and displayed contours can be added to and displayed on the map. Surface projection displays can be created for the area mapped.

The present system is also provided with additional facilities which enable optimisation of the infra red analysis to be achieved. One additional facility is the provision of a software routine which provides for automatic focusing of the surface of the sample prior to each measurement at each point of interest. As previously indicated the microscope stage is movable not only in an X-Y plane, but also in a vertical plane under the control of signals from the computer (12). The computer (12) is provided with a routine which enables it to analyse the image of the sample received by the charge coupled device of the video camera. A conventional image analysis routine can be used for this step. Thus, in operation the stage is initially moved to the first point of interest and the mirror (24) is controlled so that the microscope is in the viewing mode. The operation is to initially capture the image and to determine a focus metric, this metric is stored along with the corresponding stage height as provided by an appropriate sensor associated with the stage. This data is examined by the routine stored in the computer and a determination is made as to whether there is a peak in the focus value. If not a determination is made as to which direction the stage needs to be moved and the routine is repeated. Subsequently the routine starts a fine search and positions the stage just below the focus peak. All stored values are cleared and then an image is captured again and a focus metric determined. This is again stored along with the stage height data. The routine then identifies whether there is a peak in the focus value and if not the stage is moved by a small increment until that peak is found. When the peak is identified the stage is at the appropriate position for focus. Once this routine has been carried out the microscope is then changed to its infra red mode and an infrared analysis of the sample can be carried out as described above. The process is then repeated for the other points of interest.

A further facility which is provided by the present arrangement is an adjustment of the position of the condenser lens (29). This is mounted on the microscope support so that it can be moved upwardly or downwardly in a generally vertical direction. Associated with the condenser lens assembly is a motor which can be energised from the control electronics shown in Figure 3 to cause said vertical movement of the assembly. This facility enables the vertical position of the condenser lens assembly (29) to be optimised at each point of interest prior to the measurement at that point of interest. To achieve optimisation of the condenser lens assembly at each point of interest, prior to each measurement the computer (12) invokes a routine which measures the energy received, either in the infra red or the visible. This energy is stored together with the current position of the lens assembly, as sensed by a sensor. The stored data is examined to see whether an energy peak has been identified. If an energy peak has not been identified, a determination is made as to which direction to move the Cassegrain and the Cassegrain is moved by a preset amount and the routine repeated. When an energy peak is identified the stored values associated with the peak are noted and the Cassegrain moved to the appropriate position. Once the Cassegrain has been positioned at its optimum point, the infra red analysis can be carried out as described above.

Flow charts illustrating the routines for carrying out automatic focusing and positioning of the condenser Cassegrain are illustrated in Figures (8) and (9) respectively.

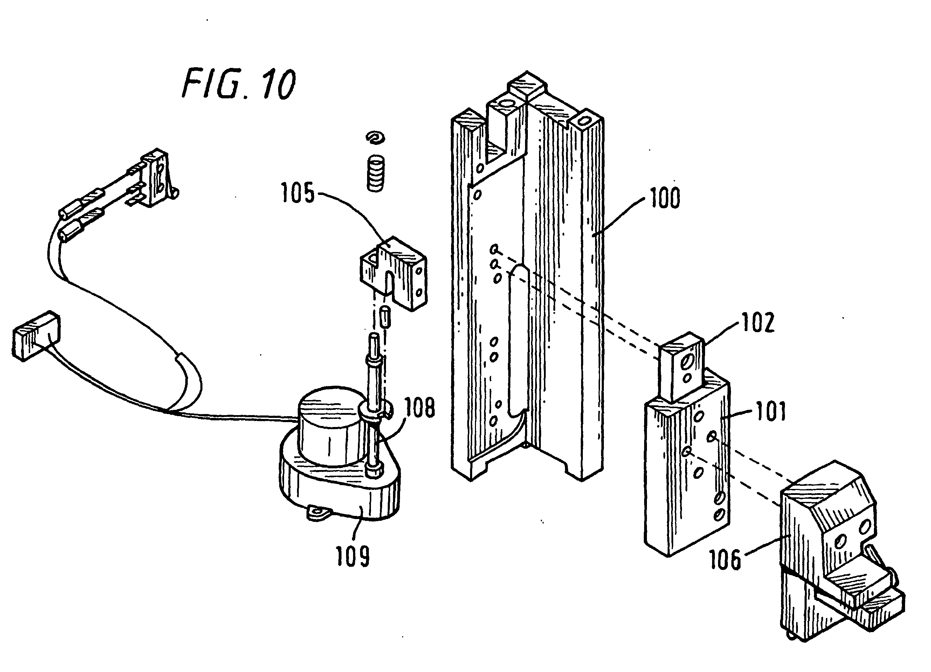

An illustration of a mechanism for providing movement to the Cassegrain assembly (29) is shown in Figure 10 of the drawings. This comprises a bracket (100) which is fixed to the microscope chassis. A linear bearing (101) having an inner slide member (102) is attached to the bracket (100) so that the bearing (101) is movable upwardly or downwardly, the slide member (102) being fixed relative to the bracket (100). A further bracket (104) is carried by the bearing (101) and is connected to the Cassegrain assembly (not shown). A drive block (105) is connected to the outer part of the linear bearing and is linked to a lead screw (108) of a motor and gearbox (109). The arrangement is such that when the motor (109) is energised the lead screw (108) is rotated either clockwise or counterclockwise and this causes the linear bearing to move upwardly or downwardly relative to the inner slide member. Because the linear bearing is connected to the Cassegrain assembly, that also moves up or down by a corresponding amount. Signals for energising the motor (109) is provided by the circuitry illustrated in Figure 3.

Associated with The above elements is a microswitch shown at (115) and this defines a datum for use by the routine operated on the computer as described above.

## Claims

1. A system for acquiring IR data including an IR microscope with a motor driven stage (16), said microscope having a video camera (22) for viewing a sample on the stage and said system including display means (14) and a computer (12) for controlling the display means to create on said display means (14) an image of an area of a sample on the microscope stage, said computer (12) being arranged to create and superimpose on said image one or more graphical markers which can be used to create coordinate data identifying positions of interest, which data is stored by said computer, the software operated by said computer controlling the acquisition of data for each point of interest such that coordinate data for several positions of interest can be stored, said stored data being used subsequently during a scanning step to automatically position the stage for analysis of the sample, whereby the stage is moved automatically successively to each position of interest defined by said stored data and IR-data is acquired for each position of interest, wherein said stage is movable in both a horizontal and a vertical plane and said computer is arranged, during said analysis, at each position of interest, to adjust the position of the stage in order to bring into focus an image of the sample on the stage.

2. A system according to claim 1, wherein the microscope includes a condenser lens and means for adjusting the vertical position of the condenser lens, said computer being arranged at each position of interest, to cause the position of the condenser lens to be adjusted to that which provides a maximum intensity of infra red radiation at the detector of the microscope.

3. A system according to claim 1 or claim 2, wherein the computer provides signals to effect automatic focusing on the basis of an image analysis procedure carried out at each position of interest.

4. A system according to claim 3, wherein the automatic focus may be carried out in both the reflection mode and transmission mode of the microscope.

## Patentansprüche

1. System zum Gewinnen von IR-Daten, das ein IR-Mikroskop mit einem motorgetriebenen Tisch (16) enthält, wobei das Mikroskop eine Videokamera (22) zum Betrachten einer Probe auf dem Tisch aufweist und das System eine Anzeigeeinrichtung (14) sowie einen Computer (12) enthält, der die Anzeigeeinrichtung so steuert, dass auf der Anzeigeeinrichtung (14) ein Bild eines Bereiches einer Probe auf dem Mikroskoptisch erzeugt wird, und der Computer (12) so eingerichtet ist, dass er eine oder mehrere grafische Markierungen erzeugt und auf das Bild auflegt, die verwendet werden können, um Koordinatendaten zu erzeugen, die Positionen von Interesse angeben, wobei die Daten von dem Computer gespeichert werden, und die von dem Computer ausgeführte Software die Gewinnung von Daten für jeden Punkt von Interesse so steuert, dass Koordinatendaten für mehrere Positionen von Interesse gespeichert werden können, und die gespeicherten Daten anschließend während eines Abtastschrittes genutzt werden, um den Tisch automatisch zur Analyse der Probe zu positionieren, wobei der Tisch automatisch nacheinander an jede Position von Interesse bewegt wird, die durch die gespeicherten Daten definiert wird, und IR-Daten für jede Position von Interesse gewonnen werden, wobei der Tisch sowohl in einer horizontalen als auch einer vertikalen Ebene bewegt werden kann und der Computer so eingerichtet ist, dass er während der Analyse an jeder Position von Interesse die Position des Tisches reguliert, um ein Bild der Probe auf dem Tisch in Fokus zu bringen.

2. System nach Anspruch 1, wobei das Mikroskop eine Kondensorlinse und eine Einrichtung zum Regulieren der vertikalen Position der Kondensorlinse enthält und der Computer so eingerichtet ist, dass er an jeder Position von Interesse bewirkt, dass die Position der Kondensorlinse auf die reguliert wird, die eine maximale Intensität von Infrarotstrahlung am Detektor des Mikroskops gewährleistet.

3. System nach Anspruch 1 oder 2, wobei der Computer Signale, die automatisches Fokussieren veranlassen, auf der Basis einer Bildanalyseprozedur erzeugt, die an jeder Position von Interesse ausgeführt wird.

4. System nach Anspruch 3, wobei die automatische Fokussierung sowohl im Reflexionsmodus als auch im Durchlassmodus des Mikroskops ausgeführt werden kann.

## Revendications

1. système destiné à l'acquisition de données infrarouges comprenant un microscope à infrarouge avec une platine entraînée par moteur (16), ledit microscope ayant une caméra vidéo (22) pour visionner un échantillon sur la platine et ledit système comprenant des moyens d'affichage (14) et un ordinateur (12) pour contrôler les moyens d'affichage et Créer sur lesdits moyens d'affichage (14) une image d'une zone de l'échantillon sur la platine du microscope, ledit ordinateur (12) étant conçu pour créer et superposer sur ladite image un ou plusieurs répères graphiques qui peuvent être utilisés pour créer des données de coordonnées identifiant les positions d'intérêt, lesquelles données sont stockées par ledit ordinateur, le logiciel exploité par ledit ordinateur contrôlant l'acquisition des données pour chaque point d'intérêt de sorte que les données de coordonnées pour plusieurs positions d'intérêt puissent être stockées, lesdites données stockées étant utilisées ultérieurement pendant une étape de balayage pour positionner automatiquement la platine pour l'analyse de l'échantillon, moyennant quoi la platine est déplacée automatiquement successivement à chaque position d'intérêt définie par lesdites données stockées et les données infrarouges sont acquises pour chaque position d'intérêt, dans lequel ladite platine est mobile à la fois sur le plan vertical et le plan horizontal et ledit ordinateur est conçu, pendant ladite analyse, à chaque position d'intérêt, pour régler la position de la platine de manière à mettre au point une image de l'échantillon sur la platine.

2. Système selon la revendication 1, dans lequel le microscope comprend une lentille de condenseur et des moyens pour régler la position verticale de la lentille de condenseur, ledit ordinateur étant conçu pour entraîner le réglage de la position de la lentille de condenseur, à chaque position d'intérêt, qui fournit une intensité maximale de radiation infrarouge au détecteur du microscope.

3. Système selon la revendication 1 ou la revendication 2, dans lequel l'ordinateur fournit des signaux pour effectuer une mise au point automatique sur la base d'une procédure d'analyse d'image effectuée à chaque position d'intérêt.

4. Système selon la revendication 3, dans lequel la mise au point automatique peut être effectuée à la fois dans le mode réflexion et dans le mode transmission du microscope.
